# EUROPEAN PATENT SPECIFICATION

(11) **EP 0 374 107 B1**
(45) Date of publication and mention of the grant of the patent: **25.08.1993**
(21) Application number: 89830535.4
(22) Date of filing: 01.12.1989
(51) Int. Cl.: B65G 47/14

(54) **An improved machine for the erection and alignment of containers such as plastic bottles**
Maschine zum Auf- und Ausrichten von Behältern, wie Flaschen aus Kunststoff
Machine pour mettre debout et aligner des récipients tels que des bouteilles en plastique

(30) Priority: 07.12.1988 IT 4017988; 14.04.1989 IT 4005989
(43) Date of publication of application: 20.06.1990
(73) Proprietor: Lanfranchi, Lino, I-43044 Collecchio, Parma (IT)
(72) Inventor: Lanfranchi, Lino, I-43044 Collecchio, Parma (IT)
(74) Representative: Lanzoni, Luciano

(56) References cited:
- FR-A- 1 320 085
- FR-A- 2 409 216
- US-A- 3 662 872
- US-A- 4 825 995

## Description

Machinery for the erection and alignment of plastic bottles, or cylindrical containers in general, can be divided conventionally into two main categories of design.

One such category of machines comprises a hopper into which bottles are loaded in bulk, consisting in a cylindrical bin with an inclined axis, inside of which a disk rotates about an axis inclined to the same angle as that of the bin; the periphery of the disk is embodied with openings designed to accommodate the bottles.

In another type of machine, the bottles are loaded in bulk into a cylindrical bin rotatable about a vertical axis and affording upright vanes, fitted to its internal side wall, by which the bottles are propelled along a fixed helical guide extending upward from the enclosed conical base of the bin toward its open top, and lying substantially at a tangent to the vanes while distanced sufficiently to permit their rotation.

The machine further comprises a fixed cylinder of greater diameter than the bin, located externally and coaxially in such a way as to create an annular cavity, or gallery, accommodating uniformly spaced means by which the bottles are erected and aligned, and dispensed onto a horizontal conveyor belt that runs tangential to the cavity.

The erection means are carried by the rotating cylindrical bin.

A machine of the second type thus briefly outlined is disclosed in German specification DE-A-2 042 547. These patent machines betray certain drawbacks, among which are low hourly output rates, and the poor stability of certain types of containers when transferring to the horizontal conveyor.

Moreover, a machine of the type is suitable only for handling tubs or bottles embodied with a neck profile.

The improvements disclosed herein are intended as pertinent to this vertical axis type of machine.

FR-A-2 409 216 shows another machine for the alignment of bottles comprising an helical guide having a flat lower part fixed to a peripherical part of a base, said helical guide being attached to an outer cylinder by means of a plurality of joint plates. It does not overcome the already cited drawbacks.

A first object of the invention is to bring about a significant increase in the production capacity of erecting and aligning machines for plastic bottles in which the charging bin is rotatable about a vertical axis.

A further object of the invention is to permit of replacing the erection and alignment means to suit the type of bottle handled, and thus to increase the productivity of the machine in relation to the length of the bottle.

The stated objects, and other objects besides, are realized in improvements according to the present invention, which relate to an erecting and aligning machine for plastic bottles having the characterizing features according to claim 1.

An additional feature of the present invention is that the vanes are associated with the bin in such a way as enables adjustment for rake and pitch by varying their number or thickness.

The angle of rake can be altered by tilting the vanes away from a position perpendicular to the base of the rotating bin, to assume an infinitely variable inclination.

Another feature of the improvements disclosed is that the gallery between the rotatable cylindrical bin and the outer cylinder affords a stabilization guide or channel rigidly associated with the outer cylinder, providing a continuation of the helical guide, which accommodates the passage of a ring of lugs rigidly associated with the rotating bin and spaced apart at the same distance as the vanes located inside the bin.

Two preferred embodiments of the invention will now be described in detail, by way of example, with the aid of the accompanying drawings, in which:

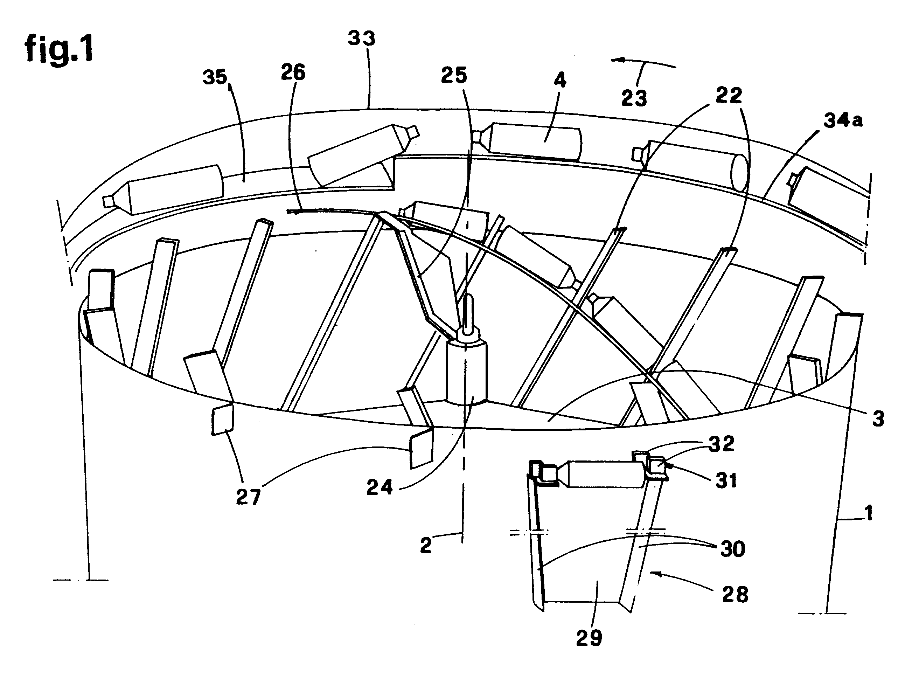

- fig 1 illustrates a part of the improved machine, exploded and in perspective;

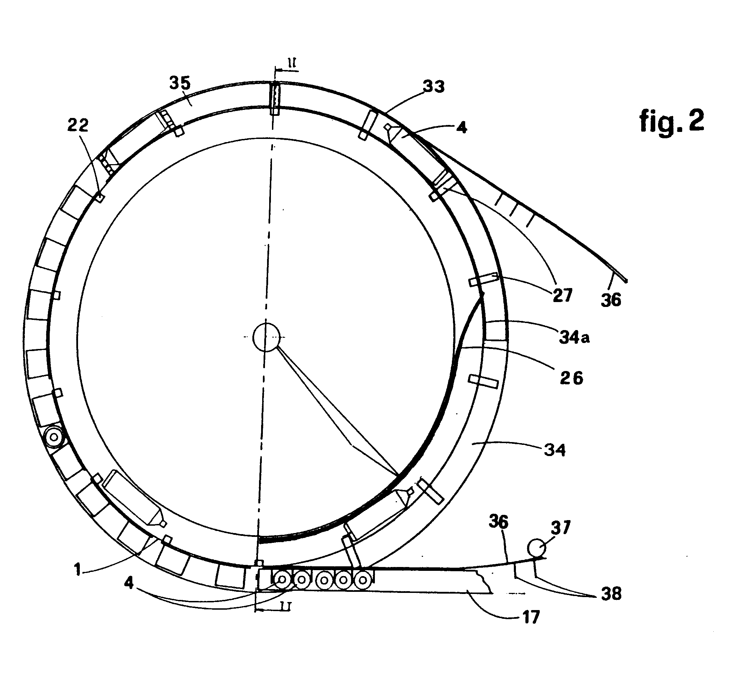

- fig 2 shows the machine in plan, from above;
- figs 3a and 3b show the section through II-II in fig 2, and the passage of a bottle from the helical guide to the erect position, respectively;
- fig 4 shows a detail of the machine in perspective;
- fig 5 is a perspective of the improved machine, from above, illustrating a possible variation in embodiment of the cylindrical bin;
- fig 6 shows a possible variation in embodiment of the erection and alignment means, viewed in front elevation;
- fig 7 is a side elevation of the means of fig 6, viewed in section through VI-VI;
- fig 8 provides the schematic illustration of a cam serving to operate a central hinged flap of the erection and alignment means of fig 6;
- fig 9 shows a detail of the erection and alignment means of fig 6.

With reference to the above drawings, 1 denotes a cylindrical bin rotatable about a vertical axis 2, and embodied with a fixed conical base 3 by which containers 4 (plastic bottles), are caused to roll toward the inside wall of the bin.

The conical base 3 is adjustable for height in relation to the bottom of the bin, in such a way that a channel can be created of which the height is variable according to the diameter or transverse dimension of the bottle handled.

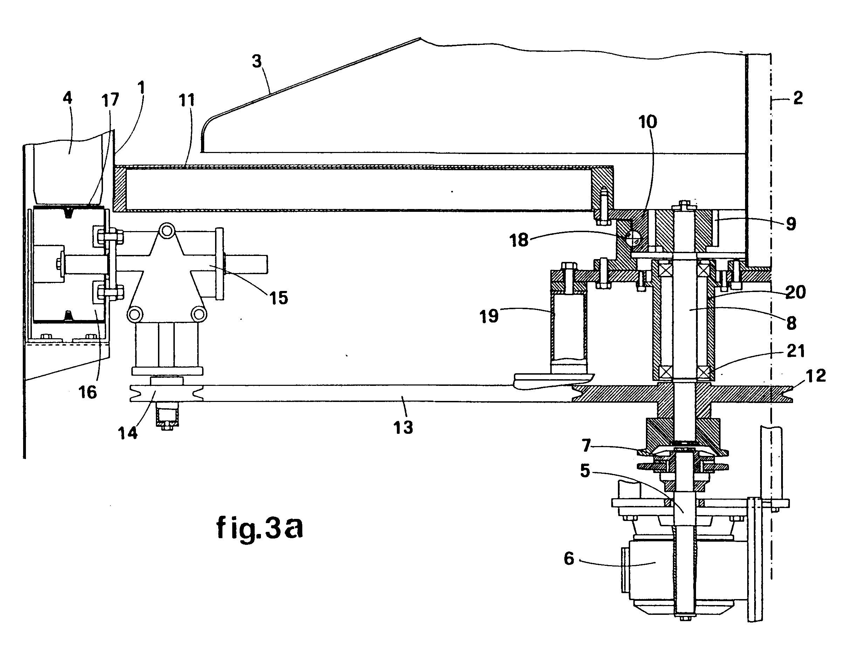

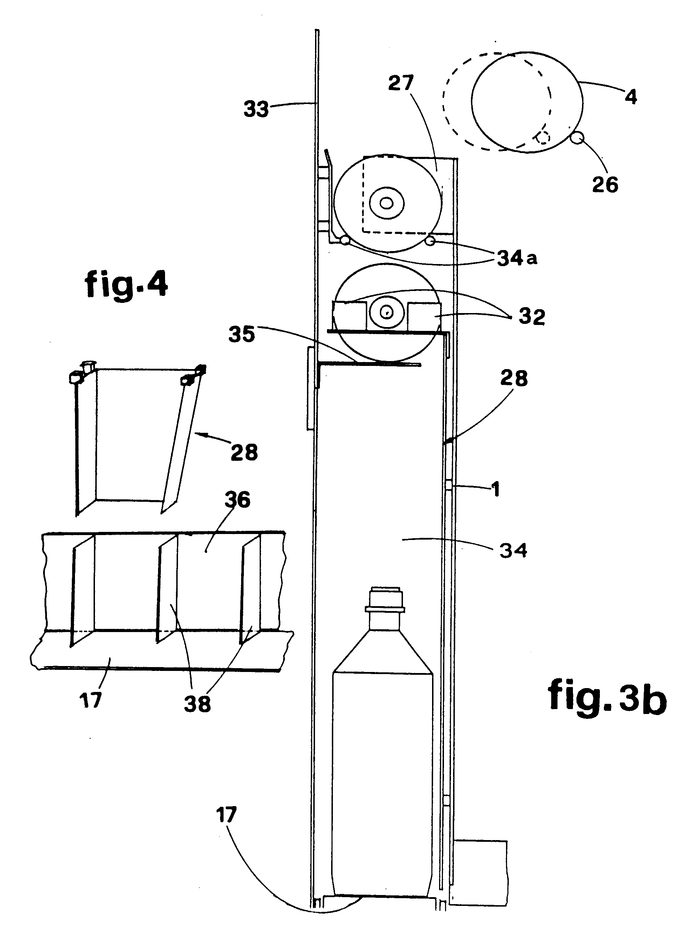

Referring to fig 3, the bin is set in rotation by a drive consisting in a shaft 5 and geared motor 6, connected via a disk clutch coupling 7 to a driven shaft 8 that carries a keyed pinion 9 in mesh with a wheel 10 rigidly associated with the bottom 11 of the bin.

12 denotes a first pulley, also keyed to the driven shaft 8, driving a belt 13 which is looped around a second pulley 14, this in turn operating an angle drive unit 15 by which rotation is transmitted to the drive roller 16 of a runout conveyor belt 17 disposed tangentially to the cylindrical bin 1.

The gear wheel 10 turns in a bearing 18 anchored to the main frame 19 of the machine; similarly, the bearings 21 of the driven shaft 8 are carried in a sleeve 20 anchored to the frame.

22 denotes a plurality of vanes fastened to the inside face of the cylindrical bin wall, which are raked at an angle in relation to the straight line generators of the cylinder, and in the direction opposite to the rotation of the bin (arrow 23).

The vanes 22 are screwed in place, or made fast by other removable means, so as to permit of altering the angle of rake, or of adapting their number to suit the longitudinal dimensions of a given bottle, in such a way that output can be increased when handling smaller size items.

Thus, the pitch of the machine, i.e. the distance between one vane and the next, can be altered by varying the number of vanes installed or replacing the existing number with others of different depth.

The angle of rake is variable from the vertical, i.e. perpendicular in relation to the bottom of the rotating bin, to any given inclination, and might be selected by way of a single external control connected to pins integral with the relative vanes and slidably accommodated in cam-profiled slots formed in the bin wall.

Also anchored to the main frame 19 of the machine is a post 24 which, in addition to supporting the conical base 3, also carries an arm 25 projecting radially toward the cylindrical wall of the bin and supporting a helical guide 26 that extends from the bottom of the bin up to the open top, substantially tangential to the vanes though distanced marginally from them so as not to inhibit their rotation.

In the example illustrated, the helical guide 26 is fashioned from rod, and distanced from the side wall of the bin by an amount such as will enable a cylindrical bottle to be cradled against the wall.

27 denotes one of a ring of impeller lugs attached to the external face of the cylindrical bin around the top edge, spaced apart uniformly one from the next by a distance commensurate with the length of the bottle 4 and with the pitch of the vanes 22.

28 denotes one of a ring of erection and alignment means, which occupy a position beneath the ring of lugs 27.

Each erection and alignment means 28 consists in a vertical chute 29 fashioned in sheet metal with two downwardly converging side walls 30 and carrying two cradles 31 uppermost, each comprising a pair of blocks 32 spaced at a distance such as permits of accommodating the neck of a single bottle 4.

The distance between cradles 31 is substantially equal to the length of the bottle minus its neck, which locates between the two blocks 32 at either end, whilst the horizontal depth of the chute at bottom is marginally greater than the diameter of the bottle.

The assembly of the rotating bin 1 with its rings of lugs 27 and chutes 29 is encompassed by a fixed outer cylinder 33, disposed coaxial with the bin in such a way as to form a gallery 34 internally of which the lugs 27 and chutes 29 are able to rotate freely. Needless to say, the dimensions of the chute will be variable at will to accommodate the particular size of bottle; similarly, the number of lugs and the number of erection and alignment means can be varied according to the length of the bottle in such a way as to increase the output capacity of the machine when handling smaller sizes.

34a denotes a flat guide attached permanently to the inside face of the outer cylinder 33, which departs from the point where the helical guide 26 terminates and extends through a distance equal to approximately one quarter of the bin circumference, or through a length that can be varied to suit the dimensions of the bottle handled.

The guide 34a in question, which might consist in two parallel rails or in a single flat element, provides a channel on which the bottles assume a stable position in relation to the outer cylinder, of height such as enables the ring of lugs 27 to ride freely above the guide 34a, engaging the bottles brought onto it from inside the bin along the helical guide 26, and propelling them forward.

35 denotes a further guide following on from the stabilization guide 34a, which consists in a flat element extending through a given distance and combining with the cylindrical walls on either side to create an accumulation channel.

This further guide 35 occupies a level below that of the stabilization guide 34a and marginally above that of the cradles 31 afforded by the chutes 29 below.

In view of the fact that an erecting and aligning system of the type thus described serves generally for handling plastic containers of particularly light weight and limited stability, use is made of an auxiliary conveyor 36 in order to prevent the bottles from toppling over when transferred to the belt 17 of the runout conveyor.

The auxiliary conveyor 36 comprises a belt passed around vertical rollers 37 and offering a plurality of ribs 38 between which compartments are formed to accommodate and accompany the single bottles.

The belt 36 and ribs 38 will be accommodated for the greater part internally of the gallery, running beneath and synchronously with the erection and alignment means, as illustrated in fig 4.

In an alternative embodiment (not illustrated) of the machine as described thus far, the cylindrical bin might be made stationary with the helical guide and the outer cylinder set in rotation, in which case the lugs and the chutes would be associated with the outer cylinder. In an arrangement of this type, the positioning and accumulation guides will be rigidly associated with the bin.

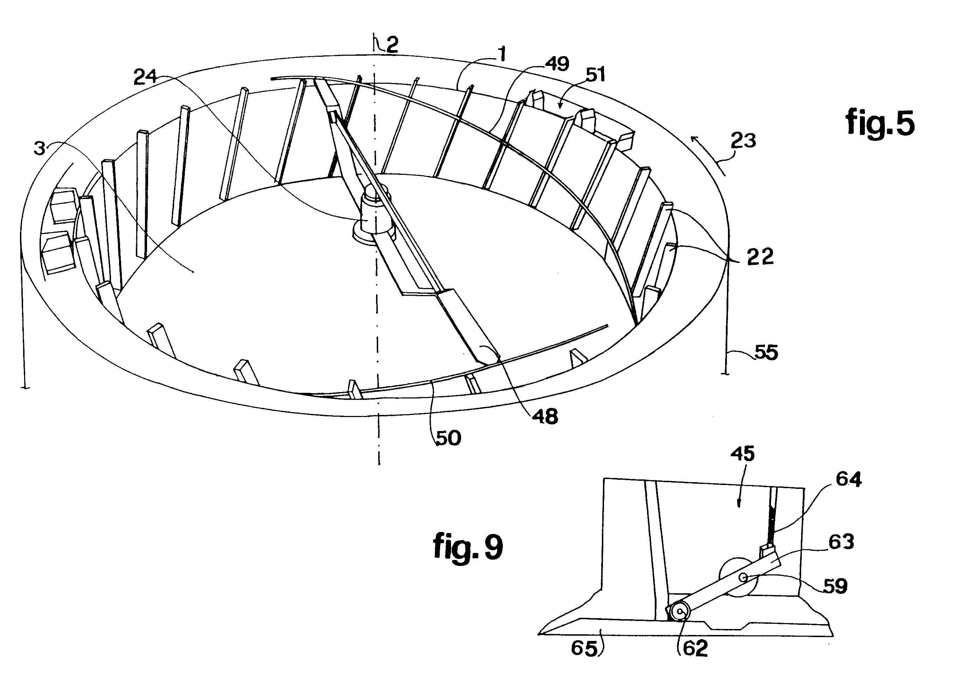

Figs 5...9 illustrate an alternative embodiment of the improved machine in which use is made of a radial arm 48 extending toward the cylindrical wall of the bin on either side and carrying two helical guides 49 and 50 which extend from the bottom of the bin to the open top, substantially tangential to the vanes and distanced marginally from them so as not to inhibit their rotation.

In the example illustrated, the helical guides are fashioned from rod, and distanced from the side wall of the bin by an amount such as will enable a cylindrical bottle to be cradled against the wall.

45 denotes a plurality of erection and alignment chutes associated permanently with the external surface of the rotating cylindrical bin.

The single erection and alignment chute affords a cradle 51 uppermost, the dimensions of which are such as to accommodate one bottle 52.

The cradle 51 consists in two vertical walls 53 terminating at bottom in respective lips 53a that combine to create an opening marginally less than the overall length, i.e. the height, of the single bottle 52.

54 denotes two annular tables located between the rotating cylindrical bin and a fixed outer cylinder denoted 55, disposed coaxially with the bin 1 in such a way as to create a gallery 55a internally of which the cradles 51 and the erection and alignment chutes 45 are able to rotate freely; more exactly, the two tables 54 provide a continuation of the two helical guides, extending a limited circumferential distance in each instance.

Each erection and alignment chute 45 comprises two substantially upright walls 56, converging downward in such a way as to create an essentially frusto-pyramidal enclosure of which the bottom section is divided by a fixed partition 57 into two funnels of width marginally greater than the diameter of the container or bottle 52.

58 denotes a hinged flap mounted centrally in the chute, directly above the fixed partition 57.

The flap 58 is rigidly associated with a pivot 59 supported by the front and rear walls of the chute, which are denoted 60 and 61 respectively.

62 denotes a following roller, carried rotatably by a lever 63 which is also associated rigidly with the pivot 59. The lever 63 is a fulcrum type, rotatable about the axis of the pivot 59, of which the load end is subject to an elastic restraint in the form of a spring 64; the follower 62 is mounted to the effort end of the lever, and engages in rolling contact with a cam 65 carried by the fixed outer cylinder 55.

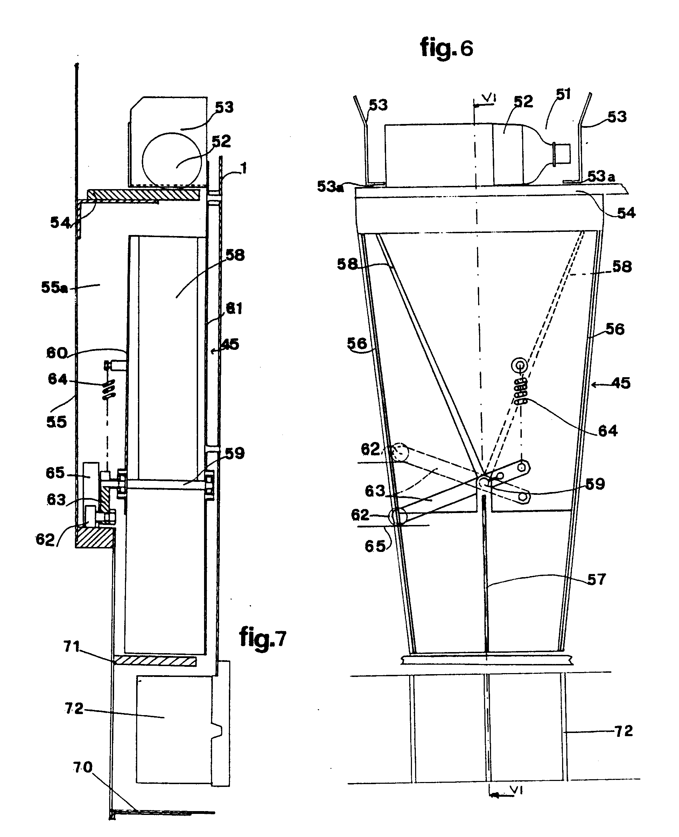

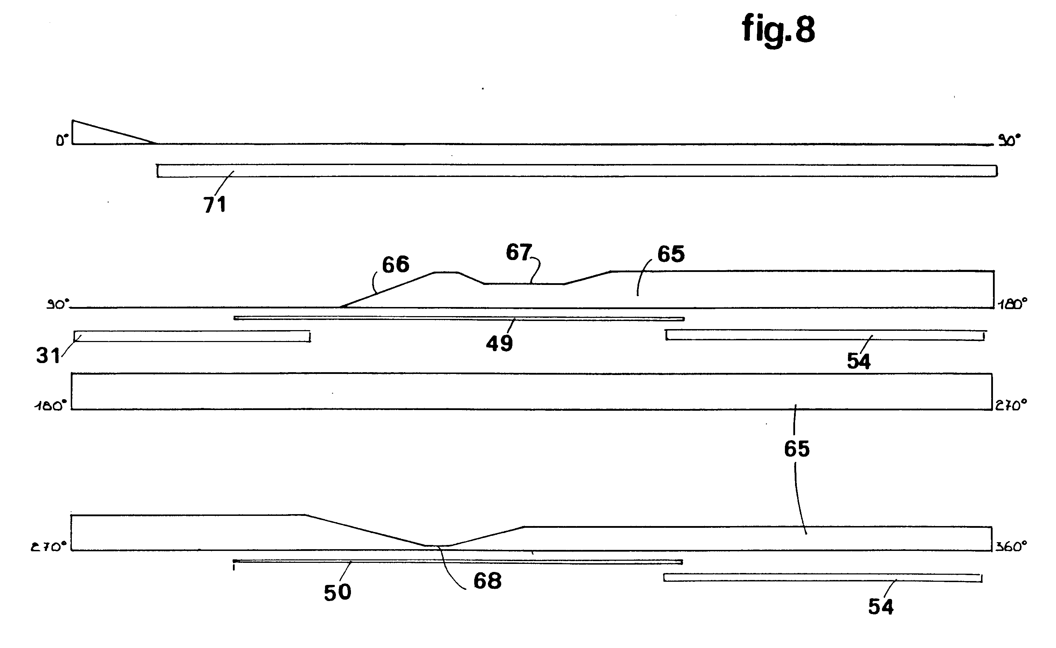

The profile of the cam, which is illustrated in the development of fig 8, commences with a slope 66 that enables the follower 62 to rise and induce the flap 58 to move away from the position of fig 6 shown in bold line to that shown in phantom line.

There follows a drop 67 from the total lift height of the cam, which serves to return the flap 58 a short way toward the bold line position of fig 6.

The movement in question helps to correct the shape of a bottle that may have found its way into the chute in a deformed condition.

68 denotes a further drop occurring prior to the return of the flap to its original position, the purpose of which is again to correct any loss of shape exhibited by the bottle.

Also illustrated in fig 8 are the positions of the helical guides 49 and 50, and of the tables 54, in relation to the cam 65.

The erection and alignment chutes thus described enable a more thorough exploitation of the full circumference of the cylindrical bin, inasmuch as the output of the machine, per unit diameter, can be substantially doubled in practice.

70 denotes a table conveyor (fig 7) of conventional embodiment, disposed horizontally and running at a tangent to the annular gallery 55a.

71 denotes a further table which occupies an arc of the gallery essentially equal to the space between the two ends of the cam; the relative positions are illustrated in the development of fig 8.

This further table 71 serves to prevent toppling, in the event that use is made of a compartmental conveyor 72 to steady unstable bottles on emerging from the annular gallery 55a.

## Claims

1. A machine for the erection and alignment of containers such as plastic bottles, of the type comprising:
- a cylindrical, randomly charged rotatable bin (1) provided internally with a conical base (3) and with a plurality of vanes (22) and at least a fixed helical guide extending substantially at a tangent to the vanes from the bottom of the bin to its open top;
- a fixed outer cylinder (33 or 55) coaxial with and of greater diameter than the cylindrical bin, and creating an annular gallery to accomodate the passage of means (28 or 45) by which bottles are erected, aligned and transferred to a horizontal conveyor belt (17) running tangential to the annular gallery;
characterized
- in that it comprises means to adjust vertically the position of the conical base (3) in relation to the bottom of the bin in order to create a channel of variable height,
- and in that the helical guide is carried by a radial arm (25) supported by a central post (24) anchored to the main frame (19) of the machine.

2. A machine as in claim 1, further comprising a plurality of erection and alignment chutes (45) each provided with a fixed partition (57) at bottom creating two alignment funnels, and a hinged flap (58) located above the partition and serving to direct the bottles into the alignment funnels singly and in alternation, characterized in that the hinged flap (58) is moved by means of a first class lever (63), rigidly associated with the flap, the lever 63 being rotatable about a central fulcrum with respect to a load arm subject to an elastic restraint, and to an effort arm engaged in rolling contact with a cam (65) carried by the fixed outer cylinder (55).

3. A machine as in claim 2, characterized in that the profile of the cam (65) comprises at least a drop (67) from the total lift height of the cam, which serves to return the flap (58) a short way back to correct any loss of shape exhibited by the bottle.

4. A machine for the erection and alignment of containers such as plastic bottles, of the type comprising:
- a cylindrical, randomly charged bin (1) provided internally with a conical base (3) and a plurality of vanes (22) and at least a helical guide extending substantially at a tangent to the vanes from the bottom of the bin to its open top;
- an outer cylinder (33 or 55) coaxial with and of greater diameter than the cylindrical bin, and creating an annular gallery to accomodate the passage of means (28 or 45) by which bottles are erected, aligned and transferred to a horizontal conveyor belt (17) running tangential to the annular gallery; characterized
- in that it comprises means to adjust vertically the position of the conical base (3) in relation to the bottom of the bin in order to create a channel of variable height,
- in that the helical guide is carried by a radial arm (25) supported by a central post (24) anchored to the main frame (19) of the machine,
- and in that the bin (1) is stationary and means are provided by which to produce rotation of the helical guide and the outer cylinder about the vertical centre axis of the bin, said outer cylinder being provided with lugs and erection means, the bin (1) being provided with positioning and accumulation guides for containers brought up on the helical guide.

5. A machine as in claim 1, characterized in that the vanes (22) are associated with the rotating bin in such a way as to enable their adjustment for rake and pitch.

6. A machine as in claim 5, characterized in that it comprises a single external control connected to pins integral with the relative vanes and slidably accomodated in cam-profiled slot formed in the bin wall, to permit variation of the angle of rake of vanes (22).

7. A machine as in claim 1, characterized in that the annular gallery (34) created between the rotating cylindrical bin and the fixed outer cylinder accomodates a stabilization guide (34a) rigidly associated with the outer cylinder and providing a continuation of the helical guide, by which passage is afforded to a ring of impeller lugs (27) rigidly associated with the exterior of the rotating bin and spaced apart one from the next through a distance identical to the pitch of the vanes (22) associated with the interior of the bin.

8. A machine as in claim 7, characterized in that it comprises an accumulation guide or channel (35) positioned in continuation from the stabilization guide (34a) and occupying a plane lower than that occupied by the stabilization guide.

9. A machine as in claim 7 or 8 characterized in that it comprises an auxiliary conveyor (36) accomodated internally of the gallery and emerging therefrom together with the horizontal conveyor belt (17), which serves to maintain the bottles erect and is embodied as a belt loop passed around vertically disposed drive rollers and exhibiting a plurality of ribs (38) spaced apart at a variable distance one from the next in such a way as to create a succession of moving compartments located beneath and driven synchronously with the erection and alignment means.

10. A machine for the erection and alignment of containers such as plastic bottles, of the type comprising:
- a cylindrical, randomly charged bin (1) provided internally with a conical base and a plurality of vanes (22) and at least a helical guide extending substantially at a tangent to the vanes from the bottom of the bin to its open top;
- an outer cylinder (33 or 55) coaxial with and of greater diameter than the cylindrical bin, and creating an annular gallery to accomodate the passage of means (28 or 45) by which bottles are erected, aligned and transferred to a horizontal conveyor belt (17) running tangential to the annular gallery;
characterized
- in that it comprises means to adjust vertically the position of the conical base (3) in relation to the bottom of the bin in order to create a channel of variable height,
- and in that it comprises two helical guides (49 and 50), fashioned from rod and carried by a radial arm (48) supported by a central post (24) anchored to the main frame (19) of the machine, said guides extending from the bottom of the bin to the open top, substantially tangential to the vanes and distanced marginally from them.

## Patentansprüche

1. Eine Maschine zum Auf- und Ausrichten von Behältern, wie Flaschen aus Kunststoff, mit:
- einem zylindrischen, zufällig beschickten Behälter (1), der innen über eine konische Grundplatte (3), eine Vielzahl von Mitnehmern (22) und zumindest eine spiralförmige Führung verfügt, die sich im wesentlichen tagential zu den Mitnehmern vom Boden des Behälters zu seinem offenen Oberrand erstreckt;
- einem festen äußeren Zylinder (33 oder 55), koaxial mit dem zylindrischen Behälter und mit größerem Durchmesser als der zylindrische Behälter und der einen ringförmigen Gang bildet, welcher die Vorrichtung (28 oder 45) aufnimmt, durch die die Flaschen auf- und ausgerichtet und einem vertikalen Förderband (17) zugeführt werden, das tangential zu dem ringförmigen Gang läuft;
dadurch gekennzeichnet,
- daß sie eine Vorrichtung zur vertikalen Ausrichtung der konischen Grundplatte (3) in bezug auf den Boden des Behälters aufweist, um so einen Kanal von variabler Höhe zu bilden,
- daß die spiralförmige Führung von einem radialen Arm (25) getragen wird, der von einer zentralen Stütze (24) gehalten wird, welche am Hauptrahmen (19) der Maschine befestigt ist.

2. Eine Maschine gemäß Anspruch 1), die weiterhin eine Vielzahl von Auf- und Ausrichtungsrutschen (45) umfaßt, die alle eine am Boden befestigte Abtrennung (57) aufweisen, die zwei Aufrichtungstrichter bilden, und eine schwenkbare Klappe (58), die sich über der Abtrennung befindet und die dazu dient, die Flaschen einzeln und abwechselnd auf die Ausrichtungstrichter auszurichten, dadurch gekennzeichnet, daß die schwenkbare Klappe (58) durch einen zweiarmigen Hebel (63) bewegt wird, der mit der Klappe fest verbunden ist; der Hebel (63) ist um den zentralen Hebeldrehpunkt drehbar hinsichtlich des Lastarmes, der einem elastischen Rückhalt unterliegt, und des Wirkarmes, der sich in rollendem Kontakt mit einer Nocke (65) befindet, die von dem festen äußeren Zylinder gehalten wird.

3. Eine Maschine gemäß Anspruch 2), dadurch gekennzeichnet, daß das Profil der Nocke (65) zumindest einen Tropfen (67) von der gesamten Hubhöhe der Nocke aufweist, der dazu dient, die Klappe (58) einen kurzen Weg zurückzubewegen, um alle Formabweichungen der Flaschen zu korrigieren.

4. Eine Maschine zur Auf- und Ausrichtung von Behältern, wie Flaschen aus Kunststoff, mit:
einem zylindrischen, zufällig beschickten Behälter (1), der innen über eine konische Grundplatte (3), eine Vielzahl von Mitnehmern (22) und zumindest eine spiralförmige Führung verfügt, die sich im wesentlichen tangential zu den Mitnehmern vom Boden des Behälters zu seinem offenen Oberrand erstreckt;
- einem festen äußeren Zylinder (33 oder 55), koaxial mit dem zylindrischen Behälter und mit größerem Durchmesser als der zylindrische Behälter und der einen ringförmigen Gang bildet, welche die Vorrichtung (28 oder 45) aufnimmt, durch die die Flaschen auf- und ausgerichtet und einem horizontalen Förderband (17) zugeführt werden, das tangential zu dem ringförmigen Gang läuft;
dadurch gekennzeichnet,
- daß sie eine Vorrichtung zur vertikalen Ausrichtung der konischen Grundplatte (3) in Bezug auf den Boden des Behälters aufweist, um so einen Kanal von variabler Höhe zu bilden,
- daß die spiralförmige Führung von einem radialen Arm (25) getragen wird, der von einer zentralen Stütze (24) gehalten wird, welche am Hauptrahmen (19) der Maschine befestigt ist,
- daß der Behälter (1) feststehend ist und das eine Vorrichtung eine Rotationsbewegung der spiralförmigen Führung und des äußeren Zylinders um die vertikale Mittelachse des Behälters erzeugt, wobei der äußere Zylinder mit einer Führungs- und Aufrichtungsvorrichtung und der Behälter (1) mit Führungen zur Positionierung und Sammlung der Behälter versehen ist, die durch die spiralförmige Führung gebracht werden.

5. Eine Maschine gemäß Anspruch 1), dadurch gekennzeichnet, daß die Mitnehmer (22) derart mit dem rotierenden Behälter verbunden sind, das Rechen und Abstand eingestellt werden können.

6. Eine Maschine gemäß Anspruch 5), dadurch gekennzeichnet, daß sie eine einzelne äußerliche Kontrollvorrichtung aufweist, die mit Stiften verbunden ist, die mit den entsprechenden Mitnehmern verbunden sind und die gleitend in einem nockenförmigen Schlitz in der Behälterwand Platz finden, um die Veränderung des Rechwinkels der Mitnehmer (22) zu erlauben.

7. Eine Maschine gemäß Anspruch 1), dadurch gekennzeichent, daß der ringförmige Gang (34) zwischen dem rotierenden zylindrischen Behälter und dem festen äußeren Zylinder eine Stabilisier-Führung (34a) aufweist, die fest mit dem äußeren Zylinder verbunden ist und eine Fortsetzung der spiralförmigen Führung aufweist, durch die eine Verbindung zu einem Ring von Vortriebführungen (27) gebildet wird, die fest an der Außenseite des rotierenden Behälters befestigt sind und die untereinander einen Abstand aufweisen, der dem der Mitnehmer (22) auf der Innenseite des Behälters genau entspricht.

8. Eine Maschine gemäß Anspruch 7), dadurch gekennzeichnet, daß sie eine Sammlungsführung bzw. einen Sammlungskanal (35) aufweist, der sich in Fortsetzung der Stabilisier-Führung (34a) befindet und eine Ebene tiefer als die von der Stabilisier-Führung eingenommene einnimmt.

9. Eine Maschine gemäß den Ansprüchen 7) oder 8), dadurch gekennzeichnet, daß sie eine zusätzliche Fördervorrichtung (36) aufweist, die sich im Innern des Ganges befindet und aus diesem zusammen mit dem horinzontalen Förderband (17) austritt, die dazu dient, die Flaschen aufrecht zu halten und die aus einer Bandschleife besteht, die um vertikal angebrachte Antriebsrollen führt und eine Vielzahl von Rippen (38) aufweist, die sich in veränderbarem Abstand voneinander befinden, derart, daß sie eine Abfolge von nebeneinander befindlichen Abteilungen bilden, die synchron mit der Auf- und Ausrichtungsvorrichtung angetrieben wird.

10. Eine Maschine zum Auf- und Ausrichten von Behältern, wie Flaschen aus Kunststoff, mit:
einem zylindrischen, zufällig beschickten Behälter (1), der innen über eine konische Grundplatte (3), eine Vielzahl von Mitnehmern (22) und zumindest eine spiralförmige Führung verfügt, die sich im wesentlichen tangential zu den Mitnehmern vom Boden des Behälters zu seinem offenen Oberrand erstreckt;
- einem festen äußeren Zylinder (33 oder 55), koaxial mit dem zylindrischen Behälter und mit größerem Durchmesser als der zylindrische Behälter und der einen ringförmigen Gang zur Aufnahme der Vorrichtung (28 oder 45) bildet, durch die die Flaschen auf- und ausgerichtet und einem horizontalen Förderband (17) zugeführt werden, das tangential zu dem ringförmigen Gang läuft;
dadurch gekennzeichnet,
- daß sie eine Vorrichtung zur vertikalen Ausrichtung der konischen Grundplatte (3) in Bezug auf den Boden des Behälters aufweist, um so einen Kanal von variabler Höhe zu bilden,
- daß sie zwei spiralförmige, aus einem Stab gebildete Führungen (49 und 50) aufweist, die von einem radialen Arm (48) getragen werden, der von einer zentralen Stütze (24) gehalten wird, welche am Hauptrahmen (19) der Maschine befestigt ist; die genannten Führungen erstrecken sich im wesentlichen tangential zu den Mitnehmern und geringfügig von diesen entfernt vom Boden des Behälters zu dem offenen Oberrand.

## Revendications

1. Une machine pour mettre debout et aligner des récipients tels que des bouteilles en plastique, du type qui comprend:
- un bac cylindrique (1), chargé au hasard, et tournant, muni à l'intérieur d'une base conique (3) et d'une pluralité de palettes (22) et d'au moins un guide hélicoïdal fixe qui s'étend en substance tangentiellement aux palettes à partir du fond jusqu'à son sommet ouvert;
- un cylindre extérieur (33 ou 55) fixe, coaxial par rapport au bac cylindrique et dont le diamètre est plus grand que celui du bac, et qui crée une galerie annulaire pour recevoir le passage de moyens (28 ou 45) par lesquels les bouteilles sont mises debout, alignées et transférées vers un transporteur à bande (17) horizontal qui court tangentiellement à la galerie annulaire;
caractérisée
- en ce fait qu'elle comprend des moyens pour régler verticalement la position de la base conique (3) par rapport ait sommet du bac afin de créer un canal à hauteur variable,
- et en ce fait que le guide hélicoïdal est porté par un bras radial (25) qui est soutenu par un pieu central (24) ancré à la structure principale (19) de la machine.

2. Une machine comme dans la revendication 1, qui comprend en plus une pluralité de glissières (45) pour mettre debout et aligner les bouteilles, chacune de ces glissières étant munie d'une cloison (57) fixée au sommet et qui crée deux entonnoirs d'alignement, et un clapet (58) à charnière situé au-dessus de la cloison et servant à diriger les bouteilles dans les entonnoirs d'alignement, une à une et en alternance, caractérisée en ce fait que le clapet (58) à charnière est actionné au moyen d'un levier (63) de premier degré, rigidement associé au clapet, le levier 63 pouvant tourner autour d'un pivot central par rapport à un bras de chargement qui est sujet à une contrainte élastique, et un bras de poussée qui est mis en contact roulant avec une came (65) portée par le cylindre fixe extérieur (55).

3. Une machine comme dans la revendication 2, caractérisée en ce fait que le profil de la came (65) comprend au moins une descente (67) à partir de la hauteur de levée de la came, qui sert à retourner le clapet (58) un petit peu en arrière pour corriger toute déformation présentée par la bouteille.

4. Une machine pour mettre debout et aligner des récipients tels que des bouteilles en plastique, du type qui comprend:
- un bac cylindrique (1) chargé au hasard, qui est muni à l'intérieur d'une base conique (3) et d'une pluralité de palettes (22) et d'au moins un guide hélicoïdal qui s'étend en substance tangentiellement vers les palettes à partir du fond jusqu'à son sommet ouvert;
- un cylindre extérieur (33 ou 55) coaxial par rapport au bac cylindrique et dont le diamètre est plus grand que celui du bac, et qui crée une galerie annulaire servant à recevoir le passage de moyens (28 ou 45) par lesquels les bouteilles sont mises debout, alignées et transférés vers une bande transporteuse (17) horizontale qui court tangentiellement à la galerie annulaire;
caractérisée
en ce fait qu'elle comprend des moyens pour régler verticalement la position de la base conique (3) par rapport au fond du bac afin de créer un canal à hauteur variable,
- en ce fait que le guide hélicoïdal est porté par un bras radial (25) qui est soutenu par un pieu central (24) ancré à la structure principale (19) de la machine,
- et en ce fait que le bac (1) est fixe et que les moyens sont munis de ce qu'il faut pour produire la rotation du guide hélicoïdal et du cylindre extérieur autour de l'axe central vertical du bac, ledit cylindre extérieur étant muni d'oreilles et de moyens pour mettre debout les récipients, le bac (1) étant muni de guides servant à positionner et à accumuler les récipients apportés sur le guide hélicoïdal.

5. Une machine comme dans la revendication 1, caractérisée en ce fait que les palettes (22) sont associées avec le bac tournant de façon à permettre leur ajustage en ce qui concerne l'inclinaison et la distance.

6. Une machine comme dans la revendication 5, caractérisée en ce fait qu'elle comprend une unique commande externe reliée aux pivots qui font bloc avec les palettes relatives et placés de façon à pouvoir glisser dans une fente à forme de came formée dans la paroi du bac, pour permettre de varier l'angle d'inclinaison des palettes (22).

7. Une machine comme dans la revendication 1, caractérisèe en ce fait que la galerie annulaire (34) créée entre le bac cylindrique tournant et le cylindre extérieur fixe loge un guide (34a) de stabilisation associé rigidement avec le cylindre extérieur et qui fournit une continuation du guide hélicoïdal, par lequel un passage est offert pour un anneau d'oreilles d'hélices (27) rigidement associées avec l'extérieur du bac tournant et espacées l'une de l'autre à une distance identique à la distance des palettes (22) associées avec l'intérieur du bac.

8. Une machine comme dans la revendication 7, caractérisée en ce fait qu'elle comprend un guide d'accumulation ou canal (35) positionné en continuation à partir du guide de stabilisation (34a) et qui occupe un plan plus bas que celui occupé par le guide de stabilisation.

9. Une machine comme dans les revendications 7 ou 8 caractérisée en ce fait qu'elle comprend un transporteur auxiliaire (36) placé à l'intérieur de la galerie et qui émerge de là en même temps que le transporteur à bande (17), qui sert à maintenir les bouteilles debout et qui est réalisé comme une boucle de bande passée autour de rouleaux de propulsion disposés verticalement, et qui présente une pluralité de côtes (38) espacées et séparées l'une de l'autre à une distance variable de façon à créer une succession de compartiments mobiles situés au-dessous des moyens qui servent à mettre debout et à aligner les récipients et qui sont propulsés en même temps qu'eux.

10. Une machine pour mettre debout et aligner des récipients tels que des bouteilles en plastique, du type qui comprend:
- un bac cylindrique (1) chargé au hasard, muni à l'intérieur d'une base cylindrique et d'une pluralité de paletttes (22) et d'au moins un guide hélicoïdal qui s'étend en substance tangentiellement aux palettes à partir du fond du bac jusqu'à son sommet ouvert;
- un cylindre extérieur (33 ou 55) coaxial par rapport au bac cylindrique et dont le diamètre est plus grand que celui du bac, et qui crée une galerie annulaire servant à recevoir le passage de moyens par lesquels les bouteilles sont mises debout, alignées et transférées vers un transporteur à bande (17) horizontal qui court tangentiellement à la galerie annulaire;
caractérisée
- en ce fait qu'elle comprend des moyens servant à régler verticalement la position de la base conique (3) par rapport au fond du bac de façon à créer un canal à hauteur variable,
- et en ce fait qu'elle comprend deux guides hélicoïdaux (49 et 50), qui sont façonnés avec une tige et portés par un bras radial (48) supporté par un pieu central (24) ancré à la structure principale (19) de la machine, lesdits guides s'étendant à partir du fond du bac jusqu'à son sommet ouvert, en substance tangentiellement aux palettes et distancés d'elles marginalement.
